# EUROPEAN PATENT APPLICATION

(11) **EP 1 953 991 A1**
(43) Date of publication of application: **06.08.2008**
(21) Application number: 07003146.3
(22) Date of filing: 14.02.2007
(51) Int. Cl.: H04L 29/06

(54) **Race condition resolution in mixed network- and host-based mobility mangement scenarios**

(30) Priority: 30.01.2007 EP 07001998
(71) Applicant: MATSUSHITA ELECTRIC INDUSTRIAL CO., LTD., Osaka 571-8501 (JP)
(72) Inventor: Weniger, Kilian, Dr., c/o Panasonic R&D Center Gmb, 63225 Langen (DE); Velev, Genadi, Dr., c/o Panasonic R&D Center Gmb, 63225 Langen (DE); Bachmann, Jens, Dr., c/o Panasonic R&D Center Gmb, 63225 Langen (DE); Schuringa, Jon, Dr., c/o Panasonic R&D Center Gmb, 63225 Langen (DE); Aramaki, Takashi, c/o Matsushita Electric Ind. Co., Osaka, 540-6319 (JP)
(74) Representative: Grünecker, Kinkeldey, Stockmair & Schwanhäusser Anwaltssozietät

(57) **Abstract**

The present invention describes a method for signalling to a mobility anchor point a position of a mobile node in a network using a network-based mobility management scheme for managing the mobility of the mobile node, said method comprising receiving, by a network element, from the mobile node, during or after network authentication of the mobile node, a sequence number used by a process implementing a mobile node-based mobility management scheme for managing the mobility of the mobile node, and transmitting, by the network element, to the mobility anchor point a message on a position of the mobile node in the network, wherein said message comprises the received sequence number. A common sequence number variable for BU and PBU messages is used, so that the HA is able to determine a correct transmission order of PBU/BU messages based on the sequence number in the message.

## Description

### FIELD OF THE INVENTION

The invention relates to inter-working of network-based and host-based mobility management in packet-based communication networks. More specifically, it relates to correct re-ordering of binding update messages at a HA receiving binding updates from mobile nodes and from Proxy Mobile IP agents.

### BACKGROUND OF THE INVENTION

Communications systems evolve more and more towards an Internet Protocol (IP)-based network. They consist of many interconnected networks, in which speech and data is transmitted from one terminal to another terminal in pieces, so-called packets. Those packets are routed to the destination by routers in a connection-less manner. Therefore, packets consist of IP header and payload information and the header comprises among other things source and destination IP address. For scalability reasons a large IP network is usually divided in subnets and uses a hierarchical addressing scheme. Hence, an IP address does not only identify the corresponding terminal, but additionally contains location information (current subnet) about this terminal. With additional information provided by routing protocols, routers in the network are able to identify the next router towards a specific destination.

If a terminal is mobile, from now on called Mobile Node (MN), and moves between subnets, it must change its IP address to a topological correct one because of the hierarchical addressing scheme. However, since connections on higher-layers such as TCP connections are defined with the IP addresses (and ports) of the communicating nodes, the connection breaks if one of the nodes changes its IP address, e.g., due to movement.

Mobile IPv6 [D. Johnson, C. Perkins, J. Arkko, "Mobility Support in IPv6", IETF RFC 3775, June 2004] is an IP-based mobility protocol that enables MNs to move between subnets in a manner transparent for higher layers and applications, i.e. without breaking higher-layer connections. Therefore, a MN has two IP addresses configured: a Care-of-Address (CoA) and a Home Address (HoA). The MN's higher layers use the HoA for communication with the communication partner (destination terminal), from now on called Corresponding Node (CN). This address does not change and serves the purpose of identification of the MN. Topologically, it belongs to the Home Network (HN) of the MN. In contrast, the CoA changes on every movement resulting in a subnet change and is used as the locator for the routing infrastructure. Topologically, it belongs to the network the MN is currently visiting. One out of a set of Home Agents (HA) located on the home link maintains a mapping of the MN's CoA to MN's HoA and redirects incoming traffic for the MN to its current location. Reasons for having a set of HAs instead of a single HA are redundancy and load balancing.

Mobile IPv6 currently defines two modes of operation: bi-directional tunnelling and route optimization. If bi-directional tunnelling is used, data packets sent by the MN are reverse tunnelled to the HA, which decapsulates the packets and sends them to the CN. Data packets sent by the CN and addressed to the HoA of the MN are intercepted by the HA in the HN and tunnelled to CoA of the MN.. For this operation, the HA must be informed about the current location (i.e., the CoA) of the MN. Therefore, the MN sends location updates messages, which are called Binding Update (BU) messages in MIPv6, to the HA. BU messages contain a sequence number, so that the HA can identify the freshness and correct ordering of BU messages received from the MN. BU messages are sent over an IPsec security association and thus are authenticated and integrity protected. However, if the MN is far away from the home network and the CN is close to the MN, the communication path is unnecessarily long, resulting in inefficient routing and high packet delays. The Mobile IPv6 route optimization mode can prevent the inefficiency of bi-directional tunnelling mode by using the direct path between CN and MN. Therefore, the MN sends BU messages to the CN, which then is able to directly send data packets to the MN (a type 2 routing header is used to send the packets on the direct path). The CN has to implement Mobile IPv6 route optimization support. To authenticate the BU message, the MN and the CN perform a so-called return routability procedure, which tests the reachability of the MN at the HoA and CoA and generates a shared session key.

Mobile IP is a client-based protocol, since the mobility management signalling is between the client and the HA. Hence, MIP is also sometimes called Client Mobile IP (CMIP) and such approach for mobility management is called host-based, client-based or MN-based mobility management. Another approach becoming popular in various standardization organizations is a network-based approach for IP mobility management, i.e., an entity in the visited access network manages the mobility for the MN and signals location updates to the HA. Network-based mobility management has some advantages like less signalling overhead over the air and mobility support for simple IP nodes (i.e., non-CMIP-capable nodes). The drawback is that it requires support from the visited access network. The IETF is working on such approach for localized mobility management based on the Mobile IP protocol. Since a network entity is acting as a proxy with respect to mobility management on behalf of the MN, the protocol is called Proxy Mobile IP (PMIP). There are variants for IPv6 called PMIPv6 (e.g., [S. Gundavelli, K. Leung, V. Devarapalli, K. Chowdhury, Proxy Mobile IPv6, draft-sgundave-mip6-proxymip6-01, Jan 2007] or [A. Bedekar, A. Singh, etl al, A Protocol for Network-based Localized Mobility Management, draft-singh-netlmm-protocol-00.txt, Dec. 2006]) and variants for IPv4 called PMIPv4 (e.g., [K. Leung, G. Dommety, P. Yegani, K. Chowdhury, Mobility Management using Proxy Mobile IPv4, draft-leung-mip4-proxy-mode-02.txt, Jan 2007]). Other protocol proposals that are not based on Mobile IP (e.g., [H. Levkowetz et al, The NetLMM Protocol, draft-giaretta-netlmm-dt-protocol-02, Oct 2006)). This invention is explained by means of the PMIPv6 protocol as defined in [S. Gundavelli, K. Leung, V. Devarapalli, K. Chowdhury, Proxy Mobile IPv6, draft-sgundave-mip6-proxymip6-01, Jan 2007] for network-based mobility management. Note that the invention is not limited to this protocol. It may also be applicable to other network-based mobility management protocols such as PMIPv4, or other variants of PMIP.

PMIPv6 [S. Gundavelli, K. Leung, V. Devarapalli, K. Chowdhury, Proxy Mobile IPv6, draft-sgundave-mip6-proxymip6-01, Jan 2007] introduces a new logical entity called Proxy Mobile IP Agent (PMA), which is co-located with the Access Router (AR) the mobile node is currently attached to and which sends BU messages on behalf of the MN. These BU messages are marked with a flag, so that they can be identified as Proxy BU (PBU) messages by the HA and distinguished from BU messages sent by the MN (i.e., CMIP signaling messages). Furthermore, PBU messages contain a Network Access Identifier (NAI) option, a home prefix option, and a timestamp option. The NAI option contains the NAI [RFC4282] of the MN, which has the form of "username@realm" and which is used to identify the MN. The home prefix option contains the HoA or home prefix of the MN. Two addressing models are supported by PMIPv6: In the so-called per-MN-prefix model, every MN has a unique home prefix, which can be used in the PBU messages instead of a HoA. In the shared prefix model, a MN uses a HoA from a prefix, which is shared between multiple MNs. The timestamp option contains the time the PBU has been sent and is used by the HA to identify the freshness and correct ordering of PBU messages. The sequence number value in the PBU message is not used by PMIPv6 and ignored by the HA.

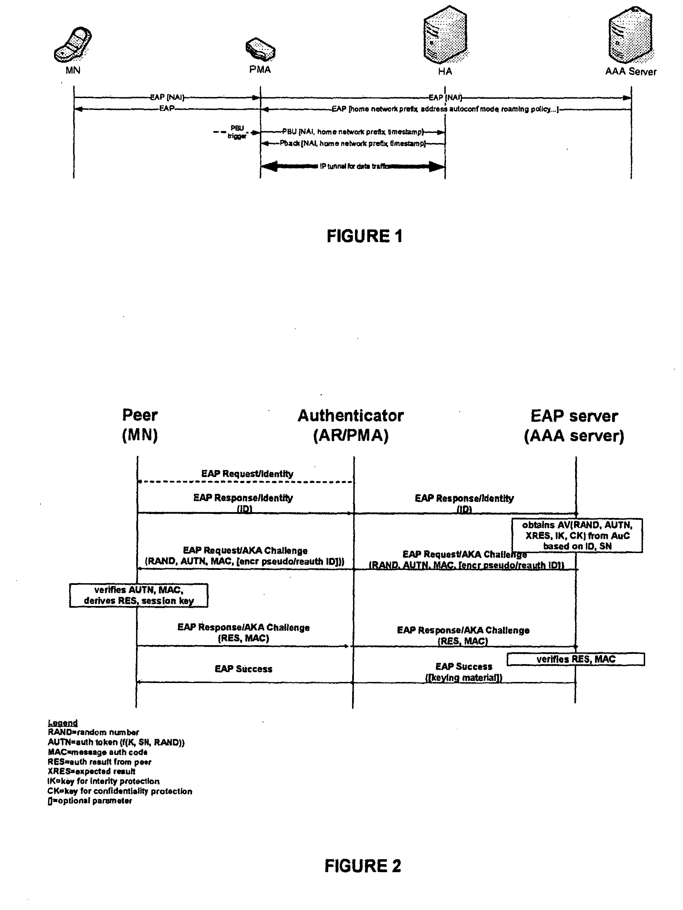

When a MN attaches to a new PMA (after a handover or after power on), it authenticated with the network, e.g., using a link-layer specific method, the EAP framework [RFC3748], and an EAP method such as EAP-AKA [RFC4187]. The PMA can act as pass-through authenticator and forwards the EAP packets to a backend authentication server, such as AAA server or infrastructure, e.g., using a AAA protocol such as Diameter [RFC3588, RFC4072] or Radius [RFC2865, RFC3579]. The MN uses, e.g., a NAI as identifier during network authentication. If the network authentication is successful, the PMA obtains the MN's profile from the AAA server incl. the MN's home prefix and stores the profile together with the NAI. The PMA then sends a PBU to the HA to register the MN's new location. The PBU can be triggered, e.g., by a successful network authentication, by DHCP messages or others. Further, the PMA announces the MN's home prefix to the MN. Consequently, the MN thinks it is at home as long as it moves within the PMIP domain and it does not notice that it changes subnets. A tunnel between HA and PMA is established and all traffic from/to the MN is forwarded through this tunnel. An exemplary signalling flow of PMIPv6 is shown in Figure 1.

Figure 2 shows an exemplary signalling flow for EAP-AKA. The Peer (MN) sends its ID, which is usually a NAI, in an EAP Request/Identity packet to the authenticator (PMA), who forwards the packet to the EAP (AAA) server in pass-through mode. The EAP server then obtains an authentication vector and sends a challenge (RAND) to peer, which can only be replied correctly by the peer (RES) if it has the correct shared secret. If so, the EAP server replies with an EAP success message and the authentication is successfully finished.

Note that the peer and EAP server can exchange an ID in EAP-AKA messages, which is different from the one in the EAP Response/Identity message. This ID is sometimes called "inner identity", as opposed to an "outer identity" sent in the EAP Request/identity packet. The inner identity can be encrypted, which allows privacy protection. A peer can use a pseudo NAI as outer identity and the real NAI as inner (encrypted) identity. Consequently, an eavesdropper cannot track a MN anymore, since there is no permanent identifier visible in the EAP packets.

The functionality of a HA as defined in RFC3775 is re-used to a large extent by PMIP, but some changes are necessary to support PMIP. Henceforth, a HA as defined in RFC3775 is called CMIP-HA and a HA as defined in draft-sgundave-mip6-proxymip6-01 is called PMIP-HA. For instance, a major difference is how the freshness of BU/PBU messages is determined by the HA. A CMIP-HA identifies the freshness of a BU message based on the sequence number in the BU, whereas a PMIP-HA identifies the freshness of a PBU messages based on the timestamp in the timestamp option in the PBU. A PMIP-HA ignores the sequence number value in PBU messages.

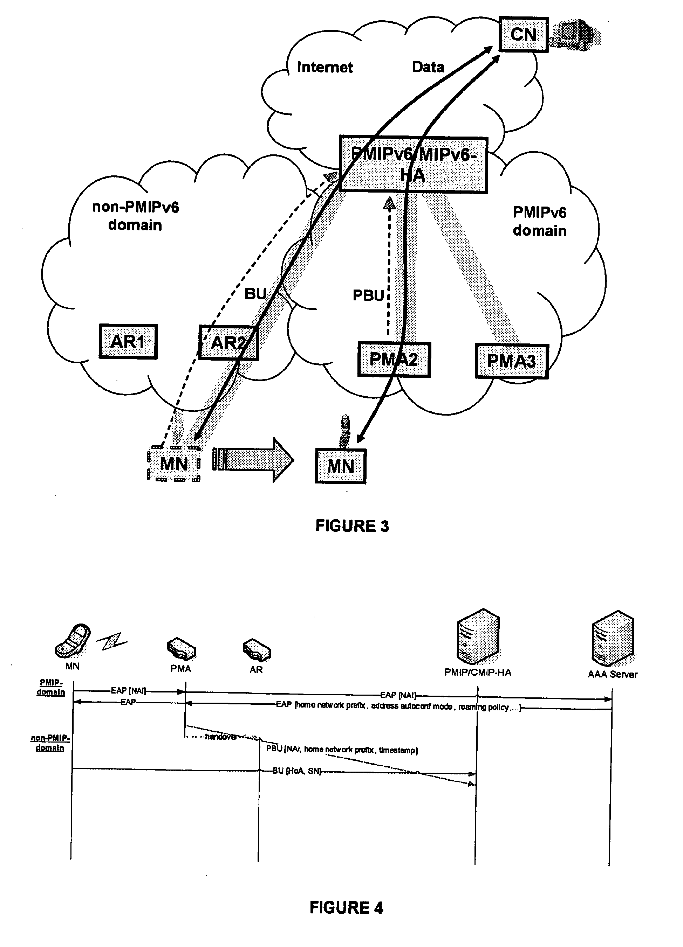

There are deployment scenarios, where network-based mobility management and host-based mobility management are mixed, i.e., the mobility of a MN is in some regions managed by the network in other regions by the MN itself and some location updates for the MN are sent by the MN itself and some are sent by the network. If in such scenarios a common anchor is used for both mobility management schemes, a problem can occur with respect to the ordering of location updates at the common anchor.. In the following, a scenario is assumed, where a PMIP-HA and a CMIP-HA for a specific MN are co-located (such entity is henceforth simply called HA) and where PMIPv6 is used for localized mobility management in the home operator network and CMIPv6 for global mobility management if the MN roams in other networks. Figure 3 shows such a co-located PMIP/CMIP-HA scenario.

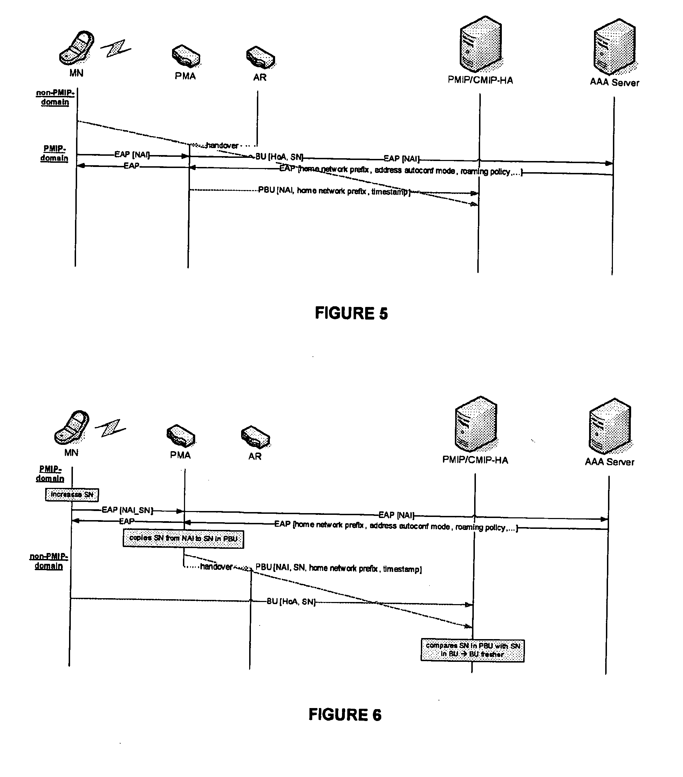

In this scenario, it is not possible for the HA to identify the freshest BU/PBU message when the MN moves from a domain where PMIP is used as mobility management protocol to a domain where CMIP is used. The HA could always accept the most recently received BU, but this can lead to race conditions, e.g., if a PBU message gets delayed, an old PBU reaching the HA after a fresher BU may be accepted. This is depicted in an exemplary signalling flow in Figure 4. Here, after the MN enters the PMIP domain, the MN authenticates with the network using EAP. The MN identifies itself to the network with the NAI and the PMA receives information about the MN such as home network prefix from the AAA server. After successful authentication, the PMA sends the PBU to the HA, which gets significantly delayed in the network. Shortly after the network authentication, the MN moves to another network and performs a handover to a network without PMIP support. Hence, the MN sends a BU to the HA. But due to the delay in the PMIP domain, the PBU reaches the HA after the BU message. If the HA now accepts the message that it receives last, it has a wrong CoA for MN and data packets destined for the MN are forwarded to the wrong location, i.e., data packets don't reach the MN and get lost. The same can happen in a CMIP-PMIP handover scenario if a BU message is delayed, as shown in Figure 5.

### SUMMARY OF THE INVENTION

The object of the invention is to provide a method for resolving race conditions in a domain using mixed network- and host-based mobility management schemes.

This object is solved by the subject matter of the independent claims. Advantageous embodiments are subject matter of the dependent claims.

An aspect of the invention is to use sequence numbers for the correct ordering of PBU andBU messages at the HA. However, since both messages are sent by different entities, namely the MN and the PMA, a synchronization of the sequence number variable between both entities is necessary. This synchronization must be very quick, since it must be finished during the minimum possible time of sending a BU message by the MN and sending a PBU message by the PMA in case of a PMIP-CMIP-handover or CMIP-PMIP-handover. Furthermore, additional signaling over the air just for sequence number synchronization should be avoided, since this would consume valuable bandwidth and energy resources.

To achieve that, it is proposed, according to one embodiment of the invention, to use the CMIP sequence number in the MN as a basis and send it to the PMA during network authentication, e.g., by encoding the CMIPv6 sequence number in the MN's NAI or by using the MIPv6 sequence number as EAP message sequence number. Consequently, the sequence number variable is shared between the processes of the CMIP running on the MN and the PMIP running on the PMA and maybe even the EAP protocol running on both MN and PMA.

However, new race conditions may occur if two entities modify a common sequence number variable. It is thus suggested, according to another embodiment of the invention, that only the MN is allowed to modify the sequence number variable. The PMA is not allowed to modify the sequence number variable. To still ensure that the sequence number is increased for a PBU message sent by the PMA, the MN increases its sequence number not only before or after it sends a BU message, but additionally before, after or during it authenticates with the network in a PMIP domain, i.e., before of after is sends the sequence number to the PMA.

Alternatively, the MN does not increase the sequence number before, after or during network authentication and the HA is adapted to consider one of a PBU and BU message as the fresher message when comparing a PBU and a BU message with both having the same sequence number. Which of the PBU and BU messages the HA must consider as fresher depends on whether the MN is implemented in a way that it increases the MIP sequence number before or after it sends the BU.

The method to determine, at the mobility anchor point, the "freshness" of received BU/PBU messages depends on the type of message received (BU or PBU) and the current binding cache entry type (proxy or no proxy entry). Another embodiment of the invention proposes a matrix for the HA to decide when to use which methods for determining the freshness of BU/PBU messages.

An embodiment of the invention provides a method for signalling to a mobility anchor point a position of a mobile node in a network using a network-based mobility management scheme for managing the mobility of the mobile node, said method comprising receiving, by a network element, from the mobile node, during or after network authentication of the mobile node, a sequence number used by a process implementing a mobile node-based mobility management scheme for managing the mobility of the mobile node, and transmitting, by the network element, to the mobility anchor point a message on a position of the mobile node in the network, wherein said message comprises the received sequence number.

Another embodiment of the invention provides a method for signalling to a mobility anchor point a position of a mobile node in a network using a network-based mobility management scheme for managing the mobility of the mobile node, wherein a network element is aware of a current time information, said method comprising the steps executed by the network element of obtaining a time information, converting the obtained time information into a sequence number, and transmitting to the mobility anchor point a message on a position of the mobile node in the network, wherein said message comprises the sequence number.

Another embodiment of the invention provides a method for signalling to a mobility anchor point a position of a mobile node in a network using a mobile node-based mobility management scheme for managing the mobility of the mobile node (MN), wherein the mobile node is aware of a current time information, said method comprising the steps executed by the mobile node of obtaining a time information, converting the obtained time information into a sequence number, and transmitting to the mobility anchor point a message on a position of the mobile node in the network, wherein said message comprises the sequence number.

According to yet another embodiment of the invention, a method for managing the mobility of a mobile node at a mobility anchor point, said mobile node moving between a first network and a second network, is provided, wherein said first network uses a mobile node-based mobility management scheme for managing the mobility of the mobile node, and said second network uses a network-based mobility management scheme for managing the mobility of the mobile node, said mobility anchor point implementing both the mobile node-based mobility management scheme and the network-based mobility management scheme, said method comprising the steps executed by the mobility anchor point of receiving a first message from the mobile node on a first position of the mobile node in the first network, receiving a second message from a network element in the second network on a second position of the mobile node in the second network, wherein the first and second message are received consecutively, comparing a first sequence number of the first message and a second sequence number of the second message, and determining a chronological order of transmission of the first and second message based on the comparison result, thereby determining a current position of the mobile node.

Another embodiment of the invention provides a method for managing the mobility of a mobile node at a mobility anchor point, said mobile node moving between a first network element and a second network element, wherein said first and second network element use a network-based mobility management scheme for managing the mobility of the mobile node, said mobility anchor point implementing the network-based mobility management scheme, said method comprising the steps executed by the mobility anchor point of receiving a first message from the first network element on a first position of the mobile node, receiving a second message from the second network element on a second position of the mobile node, wherein the first and second message are received consecutively, comparing a first sequence number of the first message and a second sequence number of the second message, and determining a chronological order of transmission of the first and second message based on the comparison result, thereby determining a current position of the mobile node.

According to yet another embodiment of the invention, a network element in a network using a network-based mobility management scheme for managing the mobility of a mobile node is provided, wherein the network element is adapted to signal to a mobility anchor point for the mobile node a position of the mobile node in the network, said network element comprising receiving means for receiving from the mobile node, during or after network authentication of the mobile node, a sequence number used by a process implementing a mobile node-based mobility management scheme for managing the mobility of the mobile node, and transmitting means for transmitting to the mobility anchor point a message on a position of the mobile node in the network, wherein said message comprises the received sequence number.

Another embodiment of the invention provides a network element in a network using a network-based mobility management scheme for managing the mobility of the mobile node, wherein the network element is adapted to signal to a mobility anchor point for the mobile node a position of the mobile node in the network, and the network element is aware of a current time information, said network element comprising time information obtaining means for obtaining a time information, converting means for converting the obtained time information into a sequence number, and transmitting means for transmitting to the mobility anchor point a message on a position of the mobile node in the network, wherein said message comprises the sequence number.

Yet another embodiment of the invention provides a mobile node in a network using a network-based mobility management scheme for managing the mobility of the mobile node, wherein said mobile node comprises transmitting means for transmitting to a network element, during or after network authentication of the mobile node, a sequence number used by a process implementing a mobile node-based mobility management scheme for managing the mobility of the mobile node.

Another embodiment of the invention provides a mobile node in a network using a mobile node-based mobility management scheme for managing the mobility of the mobile node, wherein the mobile node is adapted to signal to a mobility anchor point for the mobile node a position of the mobile node in the network, and the mobile node is aware of a current time information, said mobile node comprising time information obtaining means for obtaining a time information, converting means for converting the obtained time information into a sequence number, and transmitting means for transmitting to the mobility anchor point a message on a position of the mobile node in the network, wherein said message comprises the sequence number.

According to another embodiment of the invention, a mobility anchor point for managing the mobility of a mobile node, said mobile node moving between a first network and a second network, is provided, wherein said first network uses a mobile node-based mobility management scheme for managing the mobility of the mobile node, and said second network uses a network-based mobility management scheme for managing the mobility of the mobile node, said mobility anchor point implementing both the mobile node-based mobility management scheme and the network-based mobility management scheme, said mobility anchor point comprising receiving means for receiving a first message from the mobile node on a first position of the mobile node in the first network, and a second message from a network element in the second network on a second position of the mobile node in the second network, wherein the first and second message are received consecutively, comparing means for comparing a first sequence number of the first message and a second sequence number of the second message, and determining means for determining a chronological order of transmission of the first and second message based on the comparison result, thereby determining a current position of the mobile node.

Another embodiment of the invention provides a mobility anchor point for managing the mobility of a mobile node, said mobile node moving between a first network element and a second network element, wherein said first and second network element use a network-based mobility management scheme for managing the mobility of the mobile node, said mobility anchor point implementing the network-based mobility management scheme, said mobility anchor point comprising receiving means for receiving a first message from the first network element on a first position of the mobile node, and a second message from the second network element on a second position of the mobile node, wherein the first and second message are received consecutively, comparing means for comparing a first sequence number of the first message and a second sequence number of the second message, and determining means for determining a chronological order of transmission of the first and second message based on the comparison result, thereby determining a current position of the mobile node.

### BRIEF DECRIPTION OF THE FIGURES

- **Figure 1**:: Exemplary signaling flow for PMIPv6;
- **Figure 2:**: Exemplary signaling for low EAP-AKA [RFC4187];
- **Figure 3:**: Co-located PMIP/CMIP-HA scenario;
- **Figure 4:**: Race condition in PMIP-CMIP-handover scenario;
- **Figure 5:**: Race condition in CMIP-PMIP-handover scenario;
- **Figure 6:**: Exemplary signaling flow of sequence number synchronization in PMIP-CMIP-handover case;
- **Figure 7:**: Exemplary signaling flow of sequence number synchronization in CMIP-PMIP-handover case.

### DETAILED DESCRIPTION OF THE INVENTION

As mentioned above, an aspect of the invention consists in using a common sequence number variable for BU and PBU messages, so that the HA is able to determine the correct order of PBU/BU messages based on the sequence number in the message. The problem is that both messages are sent by different entities (MN and PMA), so that a synchronization of the sequence number variable between both entities is necessary. This synchronization must be very quick, since it must be finished during the minimum possible time of sending a BU message by the MN and sending a PBU message by the PMA in case of a PMIP-CMIP-handover or CMIP-PMIP-handover. Furthermore, additional signaling over the air just for sequence number synchronization should be avoided, since this would consume valuable bandwidth and energy resources.

It is thus proposed, according to one embodiment of the invention, to use the MIP sequence number stored in the MN and used by the CMIP process on the MN as basis for a common sequence number for CMIP and PMIP. The sequence number variable is only modified by the MN and is sent to the PMA during network authentication. Furthermore, the MN increases its MIP sequence number not only before or after it sends a BU message (as defined in RFC3775), but additionally before, after or during it authenticates with the network. The MN can be implemented in a way that it increases its sequence number either before or after sending a BU. If the MN always increases the sequence number before sending a BU message, it also must increase the sequence number before it starts the network authentication (i.e., before it sends the sequence number to the PMA). If, on the other hand, the MN increases the sequence number always after sending the BU message, it must also increase the sequence number during or after network authentication (i.e., after it sends the sequence number to the PMA). Since the MN authenticates at the network every time it enters the PMIP domain, the sequence number automatically increases every time before the PMA sends its PBU message. The PMA does not modify the common sequence number in order to avoid new race conditions arising when two entities modify a common sequence number. Hence, it is also not required to send the sequence number from the PMA to the MN.

According to an alternative embodiment of the invention, the MN does not increase the sequence number before, after or during network authentication. Hence, there might be situations where a BU and a PBU message received at the HA have a sequence number identical to each other, in which case the HA is not able to order the messages based solely on the sequence number. It is thus proposed to adapt the HA to enable it to determine whether a received PBU message, resp. BU message, was transmitted later than a consecutively received BU message, resp. PBU message, when the PBU and BU message have the same sequence number.Which one of the PBU and BU message the HA determines to be transmitted the latest in such case depends on whether the MN is implemented in a way that it increases the MIP sequence number before or after it constructs the BU message, i.e., whether the BU contains the incremented or the non-incremented sequence number. If the BU message contains the incremented sequence number, an earlier sent PBU message has a lower sequence number and a subsequently sent PBU message contains the same sequence. Hence, the HA must consider a PBU message with a sequence number X fresher as a BU message with the same sequence number X. If, on the other hand, the the BU contains the non-incremented sequence number, a subsequently sent PBU message has a higher sequence number and an earlier sent PBU message contains the same sequence. Hence, the HA must consider a BU message with a sequence number Y fresher as a PBU message with the same sequence number Y.

The PMA encodes the sequence number learned from the MN in the PBU message. There are different ways how the PMA can encode the sequence number in the PBU. In one embodiment, the sequence number is encoded in the NAI option. In this case, the HA needs to be able to decode the sequence number in the NAI. In another embodiment, the PMA puts the sequence number in the sequence number field of the PBU message.

The synchronization of the sequence number between MN to PMA during network authentication can be done in different ways. Note that the synchronization only needs to be unidirectional from the MN to the PMA, since the PMA doesn't modify the sequence number.

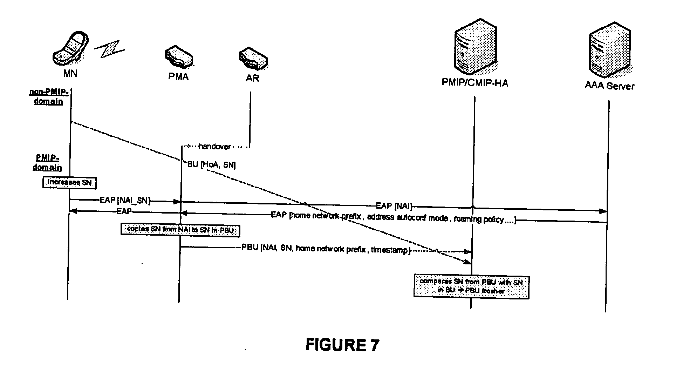

In one embodiment, the MIP sequence number is encoded in the identity contained in the EAP Response/Identity packets sent by the MN to the PMA at the beginning of the network authentication procedure. This identity may be a NAI. The sequence number can be encoded in the username portion of the NAI in form of username decoration. Therefore, the sequence number is encoded in the username portion of the NAI in a format known by at least MN and PMA, e.g., "{SN}username@realm". In the EAP-AKA method, the MN would put this decorated NAI in the AT_IDENTITY attribute of the EAP-Response/AKA-identity packet. The PMA, then reads the sequence number from the NAI. The decoration can be removed from the NAI by the PMA or AAA server or the HA. Exemplary signalling flows for the PMIP-CMIP-handover case and the CMIP-PMIP-handover case are shown in Figure 6 and Figure 7, respectively. The signalling flows are simplified and don't show all messages and message contents for the sake of clarity.

In another embodiment, the MN uses the MIP sequence number as sequence number for EAP exchanges, i.e., CMIP, PMIP, and EAP processes on MN and PMA share the same sequence number. Therefore, the MN puts the sequence number in the "identifier" field of the EAP message [RFC3748] and increases it for every EAP message sent. The PMA uses the sequence number from EAP for PMIP PBU messages. The identifier field is used by EAP to map EAP response messages to EAP request messages. Since the identifier field is only one octet of length and the MIPv6 sequence number is two octets of length, only 8 bit of the MIP sequence number may be used by the MN (i.e., the sequence number must start again from 0 when reaching 256). This must also be considered by the sequence number comparisons in MlPv6 due to wrap-arounds. Since the MN changes the sequence number when sending BU messages, it may be necessary to re-synchronize the EAP sequence number with the EAP server every time the MN enters a PMIP domain. The EAP-AKA method, for example, provides a resynchronization mechanism [RFC4187], which can be used to re-synchronize the sequence number during network authentication after the MN has sent BU messages: If the MN notices that the EAP sequence numbers of MN and EAP server are out of sync, it sends an "AUTS" parameter containing the MN's (MIP) sequence number in the EAP response/AKA challenge message to the EAP server.

In another embodiment, a pseudo NAI is used to carry the MlPv6 sequence number from the MN to the PMA. The MN selects a new pseudo NAI for every network authentication. Usually, a pseudo NAI has a random number as username portion of the NAI to prevent eavesdroppers from tracking a MN based on a permanent NAI. In this embodiment, the MN encodes the sequence number in the username portion of the NAI. In the simplest way, it just uses the sequence number as username of the pseudo NAI. In EAP-AKA, the pseudo NAI would again be put in the AT_IDENTITY attribute of the EAP-Response/AKA-Identity message. In Wimax networks, this method should work, since the pseudo NAI is selected by the MN. In 3GPP networks, however, the pseudo NAI is usually assigned by the network to the MN. But this embodiment requires that the MN selects the pseudo NAI by itself. However, the proposed method of encoding the sequence number in a pseudo NAI is still possible in 3GPP networks, although with additional round-trips. A possible solution is as follows: First, the MN sends the EAP response messages with the selected pseudo NAI containing the MIP sequence number to the EAP server. The PMA has learned the MIP sequence number already from this message, but the EAP server may not be able to map this unknown pseudo NAI to a specific MN. So the EAP server rejects the authentication. In an additional try, the MN may send the EAP Request with the real NAI and the authentication can be completed successfully.

Other possibilities of sending the MIPv6 sequence number from the MN to the PMA during or just after network authentication include explicit layer 2 or layer 3 signalling by newly defined messages, encoded in layer 2 messages or IPv6 Neighbor Discovery (NDP) messages such as Neighbor Solicitation (NS) or Router Solicitation (RS), encoded in ARP messages. Another alternative is to synchronize the sequence number via the AAA server. For instance, the HA could always update AAA about the current sequence number value in the BCE. During network authentication, the AAA server could then send the current sequence number value to the PMA (e.g., in the EAP response together with home network prefix and other information), which the PMA then could use for sending the next PBU message with a correct sequence number. However, since the synchronization over the AAA server depends also on the possibly delayed BU, new race conditions can occur and this method is not preferred.

If the layer 2 protocol uses a sequence number, which can be selected and resynchronized by the MN, it is also possible that the MN uses the MIP sequence number as sequence number of the layer 2 protocol and that the PMA learns the sequence number from layer 2 messages that need to be exchanged anyway. For instance, the MN could encode the MIP sequence number in the sequence control field of IEEE 802.11 frames. However, if layer 2 messages are used to synchronize the sequence numbers, the PMA must be co-located with the base station/access point or additional signalling is necessary between PMA and base station/access point.

It is also possible that the MN encodes the sequence number in of its IP addresses used as source address for packets sent to the PMA. E.g., the MN could encode the sequence number in the interface identifier of a link-local address or cryptographically protected address (CGA) used as source address for messages sent during network authentication or as source address of NDP or DHCP messages. It then needs to change this address every time it enters a PMIP domain.

Another possibility is to use an external source for sequence number synchronization. For instance, the MN may always be aware of the current time, e.g., because it is equipped with a GPS receiver or because it can synchronize the time over the network. If the PMAs are time synchronized as well, both MN and PMA can map the current time to a sequence number or use a timestamp option in BU and PBU messages to ensure correct ordering of BU/PBU messages. The time can be mapped to a 16 bit sequence number, e.g., by calculating the time in seconds modulo 2^16.

In the following, it is explained how the HA can determine the order of BU/PBU messages in order to infer if the received BU/PBU message must be accepted or rejected. The method to determine the freshness of received BU/PBU messages depends on the type of message received (BU or PBU) and the type of the latest binding cache entry (proxy or no proxy entry). The following table shows, which method is used in which situation:

| **Received msg** | **Most current BCE** | **Method to determine freshness of msg. If answer is yes, BU/PBU must be accepted.** |
|---|---|---|
| PBU | PMIP-BCE | Timestamp in PBU > timestamp in PMIP-BCE? (or SN in PBU > SN in PMIP-BCE?) |
| PBU | CMIP-BCE | SN in PBU > SN in CMIP-BCE? |
| BU | PMIP-BCE | SN in BU > SN in PMIP-BCE? |
| BU | CMIP-BCE | SN in BU > SN in CMIP-BCE? |

CMIP-BCE is the binding cache entry for CMIPv6, whereas PMIP-BCE is the binding cache entry for PMIPv6. Depending on the implementation, the PMIPv6 binding cache and the CMIPv6 binding cache may be co-located or separate. In any case, the HA must be able to access the CMIP binding cache when receiving a PBU message and vice versa.

If a PBU message is received by the HA and the latest BCE is the PMIP-BCE (i.e., the previously accepted message was a PBU message), then the HA compares the timestamp in the PBU message with the timestamp in the PMIP-BCE. If the timestamp value in the PBU message is higher (newer), the HA accepts the PBU message.

If a PBU message is received and the latest BCE is a CMIP-BCE (i.e., the previously accepted message was a BU message), then the HA compares the sequence number in the PBU message with the sequence number in the CMIP-BCE. If the sequence number value in the PBU message is higher than the sequence number value in the CMIP-BCE, the HA accepts the PBU message.

If a BU message is received and the latest BCE is a PMIP-BCE (i.e., the previously accepted message was a PBU message), then the HA compares the sequence number in the BU message with the sequence number in the PMIP-BCE. If the sequence number value in the BU message is higher than the sequence number value in the PMIP-BCE, the HA accepts the BU message.

If a BU message is received and the latest BCE is a CMIP-BCE (i.e., the previously accepted message was a BU message), then the HA compares the sequence number in the BU message with the sequence number in the CMIP-BCE. If the sequence number value in the BU message is higher than the sequence number value in the CMIP-BCE, the HA accepts the BU message.

As mentioned above, in case of mobility of a MN within a PMIP domain, a timestamp is used to determine the freshness of PBU messages according to the PMIPv6 draft. On the other hand, in the methods described with respect to the various embodiments of the invention, a sequence number in the PBU messages can also be used to determine the freshness of PBU messages for mobility within the PMIP domain as long as the MN authenticates at the network every time it attaches to a new PMA, the MN increases the sequence number before, after or during network authentication, and the MN sends the sequence number to the PMA. Only if a single PMA sends multiple PBU message, e.g., because of packet loss or because the binding cache entry expires, the timestamp option should be used in addition to order those messages. Alternatively, if the NAI option contains the MIP sequence number, PBU messages sent by the same PMA can be ordered by the sequence number value in the PBU message. In this case, the PMA puts the NAI with the encoded sequence number in the NAI option and increases the sequence number value in the PBU message before sending it. The HA then orders PBU messages based on the sequence number encoded in the NAI and if this sequence number is the same for multiple PBU messages, it looks into the sequence number value in the sequence number field of the PBU message. The HA must maintain two sequence numbers in the binding cache, the second one only for ordering PBUs from the same PMA. Only if the sequence number contained in the sequence number field in the PBU message is higher than the second sequence number in the binding cache, the PBU may be accepted.

According to an embodiment, a MN may need to add a NAI option to MIPv6 BUs in case that HA does not know MN's HoA and only its home network prefix, e.g., if a per-MN-prefix model is used, so that the HA can identify the MN's PMIP-BCE when receiving BU and vice versa.

If the MN uses a synchronization method based on encoding the sequence number in the NAI, the MN only needs to encode the sequence number in the NAI if the MN is located in a PMIP domain, i.e., if it is attached to an AR that is acting as PMA.

This invention is described by means of MIPv6 [RFC3775] as host-based mobility management protocol and PMIPv6 [draft-sgundave-mip6-proxymip6-01] as network-based mobility management protocol. However, the applicability of the invention is not limited to these protocols. For instance, the invention may also be applicable to other variants of network-based mobility management protocols such as draft-singh-netlmm-protocol-00, where the Proxy Mobile IP Agent is not co-located with an access router, or draft-giaretta-netlmm-dt-protocol-02.txt or draft-leung-mip4-proxy-mode-02.txt and to other host-based mobility management protocols such as MIPv4, HIP, MOBIKE, if the related anchors are co-located.

If network authentication procedure are used that are not based on EAP, it may still be possible to encode the MIP sequence number in messages sent by the MN to the network during network authentication. For instance, if the MN authenticates at the network using HTTP, it can encode the sequence number in the in http headers, e.g., in a cookie header. If the MN authenticates using IKE [RFC4306] without EAP, it can encode the sequence number in the IKE message ID.

In another embodiment, the PMA may modify the common sequence number as well. For instance, the PMA may increase the sequence number before or after sending a PBU message. In this case, the MN does not need to increase the sequence number before of after network authentication. But then the problem is that two entities modify the common sequence number and the PMA must send the modified sequence number back to the MN. This can be done with explicit signalling on layer 2 or layer 3, or implicitly, e.g., by encoding the sequence number in NDP messages such as Router Advertisement (RA) or DHCP messages. It is also possible that the PMA increases the sequence number already during network authentication (i.e., before actually sending the PBU message) and sends the increased sequence number back to the MN during network authentication.

However, the variant where multiple entities, e.g. the PMA and the MN, change the sequence number is less preferred, since new race conditions can arise, e.g., if the MN wants to send a BU after the PMA has increased the sequence number, but before the PMA has signalled the new sequence number back to the MN. To resolve such race condition, the PMA can monitor BU traffic. If the PMA detects a BU with an old sequence number, it can drop the BU and signal the current sequence number to the MN, which then can send a new BU with the correct sequence number. However, this solution would impact the handover time, so that the embodiments described above, where only the MN increases the sequence number, is preferred.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

In the previous paragraphs various embodiments of the invention and variations thereof have been described. It would be appreciated by a person skilled in the art that numerous variations and/or modifications may be made to the present invention as shown in the specific embodiments without departing from the spirit or scope of the invention as broadly described.

## Claims

1. A method for signalling to a mobility anchor point a position of a mobile node (MN) in a network using a network-based mobility management scheme for managing the mobility of the mobile node (MN), said method comprising the following steps executed by a network element:
receiving from the mobile node (MN), during or after network authentication of the mobile node (MN), a sequence number used by a process implementing a mobile node (MN)-based mobility management scheme for managing the mobility of the mobile node (MN), and
transmitting to the mobility anchor point a message on a position of the mobile node (MN) in the network, wherein said message comprises the received sequence number.

2. The method according to claim 1, further comprising incrementing, by the mobile node (MN), the sequence number used by the process implementing the mobile node (MN)-based mobility management scheme for managing the mobility of the mobile node (MN) before transmission of the sequence number to the network element,
wherein the sequence number received by the network element is the incremented sequence number.

3. The method according to claim 1, further comprising incrementing, by the mobile node (MN), the sequence number used by the process implementing the mobile node (MN)-based mobility management scheme for managing the mobility of the mobile node (MN) after transmission of the sequence number to the network element.

4. The method according to one of claims 1 to 3, wherein the network authentication is according to the extensible authentication protocol (EAP), and said method further comprises encoding, by the mobile node (MN), the sequence number in at least one of a network access identifier of an EAP response/identity packet message and an identifier field of an EAP packet.

5. The method according to one of claims 1 to 3, further comprising transmitting, by the mobile node (MN), the sequence number to the network element using at least one of a layer 2 or layer 3 message.

6. The method according to one of claims 1 to 3, further comprising encoding, by the mobile node (MN), the sequence number in a source address of an IP packet transmitted to the network element during network authentication or in a source address of a Neighbour Discovery protocol (NDP) or Dynamic Host Configuration Protocol (DHCP) packet.

7. The method according to one of claims 1 to 3, wherein the network authentication is according to the hypertext transfer protocol (HTTP), and said method further comprises transmitting, by the mobile node (MN), the sequence number to the network element in a HTTP packet header.

8. The method according to one of claims 1 to 3, wherein the network authentication uses the Internet Key Exchange protocol (IKE), and said method further comprises transmitting, by the mobile node (MN), the sequence number to the network element in a IKE message ID.

9. The method according to one of claims 1 to 8, wherein the network-based mobility management scheme complies with the proxy mobile internet protocol version 6, the network element is a proxy mobile agent, the mobility anchor point is a home agent for the mobile node (MN), and the message on the position of the mobile node (MN) in the network transmitted by the network element to the mobility anchor point is a proxy binding update transmitted by the proxy mobile agent to the mobility anchor point.

10. The method according to claim 9, wherein the proxy mobile agent encodes the sequence number in the network access identifier field or the sequence number field of the proxy binding update.

11. A method for signalling to a mobility anchor point a position of a mobile node (MN) in a network using a network-based mobility management scheme for managing the mobility of the mobile node (MN), wherein a network element is aware of a current time information, said method comprising the following steps executed by the network element:
obtaining a time information,
converting the obtained time information into a sequence number, and
transmitting to the mobility anchor point a message on a position of the mobile node (MN) in the network, wherein said message comprises the sequence number.

12. A method for signalling to a mobility anchor point a position of a mobile node (MN) in a network using a mobile node (MN)-based mobility management scheme for managing the mobility of the mobile node (MN), wherein the mobile node (MN) is aware of a current time information, said method comprising the following steps executed by the mobile node (MN):
obtaining a time information,
converting the obtained time information into a sequence number, and
transmitting to the mobility anchor point a message on a position of the mobile node (MN) in the network, wherein said message comprises the sequence number.

13. A method for managing the mobility of a mobile node (MN) at a mobility anchor point, said mobile node (MN) moving between a first network and a second network, wherein said first network uses a mobile node (MN)-based mobility management scheme for managing the mobility of the mobile node (MN), and said second network uses a network-based mobility management scheme for managing the mobility of the mobile node (MN), said mobility anchor point implementing both the mobile node (MN)-based mobility management scheme and the network-based mobility management scheme, said method comprising the following steps executed by the mobility anchor point:
receiving a first message from the mobile node (MN) on a first position of the mobile node (MN) in the first network,
receiving a second message from a network element in the second network on a second position of the mobile node (MN) in the second network, wherein the first and second message are received consecutively,
comparing a first sequence number of the first message and a second sequence number of the second message, and
determining a chronological order of transmission of the first and second message based on the comparison result, thereby determining a current position of the mobile node (MN).

14. The method according to claim 13, wherein the sequence number series is common to a first process in the mobile node (MN) implementing the mobile node (MN)-based mobility management scheme and to a second process in the network element implementing the network-based mobility management scheme.

15. The method according to claim 13 or 14, wherein the mobile node (MN) exchanges data with a corresponding node over the mobility anchor point, and said method further comprises:
selecting one of a first IP address of the mobile node (MN) belonging to the first network and a second IP address of the mobile node (MN) belonging to the second network based on the determined chronological order of transmission of the first and second message, and
transmitting the data from the corresponding node to the selected IP address of the mobile node (MN).

16. The method according to claim 15, wherein the first IP address is a first care-of-address of the mobile node (MN) belonging to the first network, and the second IP address is a second care-of-address of the mobile node (MN) belonging to the second network.

17. The method according to claim 15 or 16, wherein the IP address of the mobile node (MN) corresponding to the one of the first and second message that has been transmitted the latest is selected as the IP address of the mobile node (MN) for the data transmission.

18. The method according to one of claims 13 to 17, wherein the latest received one of the first and second message is determined as being transmitted the latest when the sequence number of said latest received one of the first and second message is larger than the sequence number of the first received one of the first and second message.

19. The method according to one of claims 13 to 18, wherein, in case the first sequence number in the first message has a value that has been incremented by the mobile node (MN) before transmission of the first message, said method further comprises determining the second message being transmitted the latest when the first sequence number of the first message is equal to the second sequence number of the second message.

20. The method according to one of claims 13 to 18, wherein, in case the first sequence number in the first message has a value that has been incremented by the mobile node (MN) after transmission of the first message, said method further comprises determining the first message being transmitted the latest when the first sequence number of the first message is equal to the second sequence number of the second message.

21. The method according to one of claims 11 to 20, wherein the mobile node (MN)-based mobility management scheme complies with the mobile internet protocol, and
the network-based mobility management scheme complies with one of the versions of the proxy mobile internet protocol or with the network-based localized mobility management protocol.

22. The method according to one of claims 13 to 21, wherein the first message is a binding update message transmitted by the mobile node (MN) to the mobile anchor point.

23. The method according to one of claims 13 to 22, wherein the network-based mobility management scheme complies with the proxy mobile internet protocol version 6, the network element is a proxy mobile agent, which is co-located with an access router in the second network, and the mobility anchor point is a home agent for the mobile node (MN).

24. The method according to claim 23, wherein the second message from the network element in the second network is a proxy binding update transmitted by the proxy mobile agent to the mobility anchor point.

25. A method for managing the mobility of a mobile node (MN) at a mobility anchor point, said mobile node (MN) moving between a first network element and a second network element, wherein said first and second network element use a network-based mobility management scheme for managing the mobility of the mobile node (MN), said mobility anchor point implementing the network-based mobility management scheme, said method comprising the following steps executed by the mobility anchor point:
receiving a first message from the first network element on a first position of the mobile node (MN),
receiving a second message from the second network element on a second position of the mobile node (MN), wherein the first and second message are received consecutively,
comparing a first sequence number of the first message and a second sequence number of the second message, and
determining a chronological order of transmission of the first and second message based on the comparison result, thereby determining a current position of the mobile node (MN).

26. The method according to claim 25, wherein the latest received one of the first and second message is determined as being transmitted the latest when the sequence number of said latest received one of the first and second message is larger than the sequence number of the first received one of the first and second message.

27. The method according to claim 25, further comprising:
comparing a first timestamp of the first message and a second timestamp of the second message when the first sequence number and the second sequence number are equal to each other, and
determining a chronological order of transmission of the first and second message based on the second comparison result, thereby determining a current position of the mobile node (MN).

28. The method according to claim 27, wherein the latest received one of the first and second message is determined as being transmitted the latest when the timestamp of said latest received one of the first and second message is larger than the timestamp of the first received one of the first and second message.

29. The method according to one of claims 25 to 28, wherein the network-based mobility management scheme complies with one of the versions of the proxy mobile internet protocol or with the network-based localized mobility management protocol.

30. The method according to one of claims 25 to 29, wherein the network-based mobility management scheme complies with the proxy mobile internet protocol version 6, the first and second network element are respectively a first and second proxy mobile agent, which are co-located with a respective first and second access router, and the mobility anchor point is a home agent for the mobile node (MN).

31. The method according to claim 30, wherein the first and second message from the first and second network element are respectively a first and second proxy binding update transmitted by the respective first and second proxy mobile agent to the mobility anchor point.

32. A network element in a network using a network-based mobility management scheme for managing the mobility of a mobile node (MN), wherein the network element is adapted to signal to a mobility anchor point for the mobile node (MN) a position of the mobile node (MN) in the network, said network element comprising:
receiving means for receiving from the mobile node (MN), during or after network authentication of the mobile node (MN), a sequence number used by a process implementing a mobile node (MN)-based mobility management scheme for managing the mobility of the mobile node (MN), and
transmitting means for transmitting to the mobility anchor point a message on a position of the mobile node (MN) in the network, wherein said message comprises the received sequence number.

33. The network element according to claim , 32, wherein the network-based mobility management scheme complies with the proxy mobile internet protocol version 6, the network element is a proxy mobile agent, and the message on the position of the mobile node (MN) in the network transmitted by the network element to the mobility anchor point is a proxy binding update transmitted by the proxy mobile agent to the mobility anchor point.

34. The network element according to claim 33, wherein the proxy mobile agent is adapted to encode the sequence number in the network access identifier field or the sequence number field of the proxy binding update.

35. A network element in a network using a network-based mobility management scheme for managing the mobility of the mobile node (MN), wherein the network element is adapted to signal to a mobility anchor point for the mobile node (MN) a position of the mobile node (MN) in the network, and the network element is aware of a current time information, said network element comprising:
time information obtaining means for obtaining a time information,
converting means for converting the obtained time information into a sequence number, and
transmitting means for transmitting to the mobility anchor point a message on a position of the mobile node (MN) in the network, wherein said message comprises the sequence number.

36. A mobile node in a network using a network-based mobility management scheme for managing the mobility of the mobile node (MN), wherein said mobile node (MN) comprises:
transmitting means for transmitting to a network element, during or after network authentication of the mobile node (MN), a sequence number used by a process implementing a mobile node (MN)-based mobility management scheme for managing the mobility of the mobile node (MN).

37. The mobile node according to claim 36, further comprising incrementing means for incrementing the sequence number used by the process implementing the mobile node (MN)-based mobility management scheme for managing the mobility of the mobile node (MN) before transmission of the sequence number to the network element,
wherein said transmitting means are adapted to transmit the incremented sequence number to the network element.

38. The mobile node according to claim 36, further comprising incrementing means for incrementing the sequence number used by the process implementing the mobile node (MN)-based mobility management scheme for managing the mobility of the mobile node (MN) after transmission of the sequence number to the network element.

39. The mobile node according to one of claims 36 to 38, wherein said mobile node is adapted to execute the method steps according to one of claims 4 to 8.

40. A mobile node in a network using a mobile node (MN)-based mobility management scheme for managing the mobility of the mobile node (MN), wherein the mobile node (MN) is adapted to signal to a mobility anchor point for the mobile node (MN) a position of the mobile node (MN) in the network, and the mobile node (MN) is aware of a current time information, said mobile node (MN) comprising:
time information obtaining means for obtaining a time information,
converting means for converting the obtained time information into a sequence number, and
transmitting means for transmitting to the mobility anchor point a message on a position of the mobile node (MN) in the network, wherein said message comprises the sequence number.

41. A mobility anchor point for managing the mobility of a mobile node (MN), said mobile node (MN) moving between a first network and a second network, wherein said first network uses a mobile node (MN)-based mobility management scheme for managing the mobility of the mobile node (MN), and said second network uses a network-based mobility management scheme for managing the mobility of the mobile node (MN), said mobility anchor point implementing both the mobile node (MN)-based mobility management scheme and the network-based mobility management scheme, said mobility anchor point comprising:
receiving means for receiving a first message from the mobile node (MN) on a first position of the mobile node (MN) in the first network, and a second message from a network element in the second network on a second position of the mobile node (MN) in the second network, wherein the first and second message are received consecutively,
comparing means for comparing a first sequence number of the first message and a second sequence number of the second message, and
determining means for determining a chronological order of transmission of the first and second message based on the comparison result, thereby determining a current position of the mobile node (MN).

42. The mobility anchor point according to claim 41, wherein the sequence number series is common to a first process in the mobile node (MN) implementing the mobile node (MN)-based mobility management scheme and to a second process in the network element implementing the network-based mobility management scheme.

43. The mobility anchor point according to claim 41 or 42, wherein the mobile node (MN) exchanges data with a corresponding node over the mobility anchor point, and said mobility anchor point further comprises:
selecting means for selecting one of a first IP address of the mobile node (MN) belonging to the first network and a second IP address of the mobile node (MN) belonging to the second network based on the determined chronological order of transmission of the first and second message, and
transmitting means for transmitting the data from the corresponding node to the selected IP address of the mobile node (MN).

44. The mobility anchor point according to claim 43, wherein the mobility anchor point is adapted to select the IP address of the mobile node (MN) corresponding to the one of the first and second message that has been transmitted the latest as the IP address of the mobile node (MN) for the data transmission.

45. The mobility anchor point according to one of claims 41 to 44, wherein the mobility anchor point is adapted to determine the latest received one of the first and second message as being transmitted the latest when the sequence number of said latest received one of the first and second message is larger than the sequence number of the first received one of the first and second message.

46. The mobility anchor point according to one of claims 41 to 45, wherein, in case the first sequence number in the first message has a value that has been incremented by the mobile node (MN) before transmission of the first message, said mobility anchor point is adapted to determine the second message being transmitted the latest when the first sequence number of the first message is equal to the second sequence number of the second message.

47. The mobility anchor point according to one of claims 41 to 45, wherein, in case the first sequence number in the first message has a value that has been incremented by the mobile node (MN) after transmission of the first message, said mobility anchor point is adapted to determine the first message being transmitted the latest when the first sequence number of the first message is equal to the second sequence number of the second message.

48. A mobility anchor point for managing the mobility of a mobile node (MN), said mobile node (MN) moving between a first network element and a second network element, wherein said first and second network element use a network-based mobility management scheme for managing the mobility of the mobile node (MN), said mobility anchor point implementing the network-based mobility management scheme, said mobility anchor point comprising:
receiving means for receiving a first message from the first network element on a first position of the mobile node (MN), and a second message from the second network element on a second position of the mobile node (MN), wherein the first and second message are received consecutively,
comparing means for comparing a first sequence number of the first message and a second sequence number of the second message, and
determining means for determining a chronological order of transmission of the first and second message based on the comparison result, thereby determining a current position of the mobile node (MN).

49. The mobility anchor point according to claim 48, wherein the mobility anchor point is adapted to determine the latest received one of the first and second message as being transmitted the latest when the sequence number of said latest received one of the first and second message is larger than the sequence number of the first received one of the first and second message.

50. The mobility anchor point according to claim 48, further comprising:
second comparing means for comparing a first timestamp of the first message and a second timestamp of the second message when the first sequence number and the second sequence number are equal to each other,
wherein said determining means are adapted to determine a chronological order of transmission of the first and second message based on the second comparison result, thereby determining a current position of the mobile node (MN).

51. The mobility anchor point according to claim 50, wherein the mobility anchor point is adapted to determine the latest received one of the first and second message as being transmitted the latest when the timestamp of said latest received one of the first and second message is larger than the timestamp of the first received one of the first and second message.
